Europäisches Patentamt

European Patent Office

Office européen des brevets

(19)

(11) Numéro de publication : **0 092 013**
**B1**

## (12) FASCICULE DE BREVET EUROPÉEN

(45) Date de publication du fascicule du brevet :
04.03.87

(51) Int. Cl.⁴ : **A 01 D 43/08**, A 01 D 34/64

(21) Numéro de dépôt : 82400715.7

(22) Date de dépôt : 21.04.82

(54) Récolteuse hacheuse.

(43) Date de publication de la demande :
26.10.83 Bulletin 83/43

(45) Mention de la délivrance du brevet :
04.03.87 Bulletin 87/10

(84) Etats contractants désignés :
AT BE CH DE FR GB LI NL

(56) Documents cités :
DE-A- 2 116 583
GB-A- 988 160

(73) Titulaire : **DEERE & COMPANY**
**1 John Deere Road**
**Moline Illinois 61265 (US)**

(72) Inventeur : **Magin, Ludwig**
**Am Deutschhof 2 + 4**
**D-6707 Schifferstadt (DE)**

(74) Mandataire : **Pruvost, Marc Henri**
**Cabinet ORES 6, Avenue de Messine**
**F-75008 Paris (FR)**

Jouve, 18, rue St-Denis, 75001 Paris, France

**Description**

La présente invention se rapporte d'une façon générale aux récolteuses-hacheuses ou récolteuses-hacheuses-chargeuses.

Les récolteuses-hacheuses sont des machines de récolte qui comportent, d'une façon générale, un châssis destiné à être attelé à un tracteur et s'étendant, en position de travail normale, latéralement à ce tracteur, ledit châssis étant soutenu par une roue porteuse vers son extrémité libre. Le corps de la machine se trouve alors placé à côté du tracteur. Bien que de telles machines donnent généralement satisfaction dans les conditions de travail normalement rencontrées, elles présentent toutefois un certain nombre d'inconvénients.

Ainsi dans la position d'attelage normale précitée de la machine, la largeur totale de la récolteuse-hacheuse et du tracteur est trop importante pour permettre le déplacement de l'attelage sur route ou dans des granges relativement étroites. En outre, la récolteuse-hacheuse elle-même exige une place non négligeable pour son entreposage quand elle n'est pas en service. Enfin, il est impossible d'effectuer la récolte sur un seul rang de plants dans le champ ou de commencer le travail de récolte au bord d'un champ qui jouxte un autre champ dans lequel poussent des récoltes, sans endommager ces autres récoltes lors du travail dans le premier champ.

Il a déjà été proposé, pour remédier à ces inconvénients, de réaliser une récolteuse-hacheuse pouvant être attelée derrière un tracteur. Mais dans ce cas les conditions de travail normales selon lesquelles la machine se déplace latéralement au tracteur pendant le travail dans le champ ne sont plus obtenues.

On a également proposé de remédier à cet inconvénient (Karl Mengele und Söhne, Maschinenfabrik und Eisengiesserei GmbH & Co.) en réalisant une récolteuse-hacheuse pouvant être amenée d'une position à une autre par pivotement sans être dételée du tracteur. Une telle solution permet ainsi au conducteur du tracteur, quand le besoin s'en fait sentir, que ce soit pour le transport de la machine ou pour le travail en reculant en bout de champ, d'amener rapidement le corps de la machine portant les organes de travail dans la position désirée. Mais l'agencement proposé exige alors des moyens additionnels pour le raccordement des organes de travail mobiles à l'arbre d'entraînement, notamment à l'arbre de prise de force du tracteur dans la seconde position de la machine, c'est-à-dire pour le travail en reculant. En outre, le réglage prévu de la position latérale de la machine par rapport au tracteur exige une intervention incommode du conducteur, qui doit desserrer des boulons de blocage, régler une traverse de la machine ou de son châssis, puis réaliser à nouveau le blocage.

Il est en outre connu, par la Demande de Brevet allemand DE-OS-2 116 583, de réaliser le châssis de la machine sous la forme d'une poutre pouvant être reliée au tracteur et formée de deux parties articulées entre elles autour d'un axe vertical, l'une de ces parties portant le corps de la machine et pouvant être déplacée par pivotement entre une première position située dans l'alignement de l'autre partie et une seconde position dans laquelle elle est rabattue derrière cette autre partie, notamment pour le transport ou le travail en reculant.

Toutefois, selon cette construction, les positions latérale et arrière de la machine sont déterminées de façon rigide par les dimensions des parties de la poutre et la position de l'axe d'articulation entre ces parties.

Le but de l'invention est d'apporter des perfectionnements aux agencements connus et notamment de permettre la réalisation d'une récolteuse-hacheuse pouvant être amenée de façon connue par la Demande de Brevet DE-OS-2 116 583 dans l'une ou l'autre de deux positions, à savoir dans une position latérale de travail normale et dans une position de transport ou de travail située derrière le tracteur, et dont en outre la position latérale par rapport au tracteur peut être réglée facilement, à la fois dans la condition de travail latérale normale et dans la condition de positionnement arrière, sans démontage d'organes par le conducteur du tracteur, l'entraînement des organes actifs de la machine pouvant être assuré dans la position d'attelage derrière le tracteur sans devoir prévoir de moyens additionnels notables.

L'invention concerne à cet effet une récolteuse-hacheuse du type comportant un châssis destiné à être attelé à un tracteur et à s'étendre latéralement à ce tracteur en position de travail normale, ce châssis portant le corps de la machine avec les organes actifs usuels étant soutenu du côté opposé au tracteur par une roue porteuse roulant sur le sol, ledit châssis comportant une poutre reliée au tracteur formée d'une première partie intérieure et d'une seconde partie extérieure articulées entre elles autour d'un axe vertical, la partie extérieure portant le corps de la machine et pouvant être déplacée par pivotement autour de l'axe vertical entre une première position située dans l'alignement de la partie intérieure et une seconde position dans laquelle elle est rabattue derrière cette partie intérieure, caractérisée en ce que ce châssis de la machine comprend en outre un support formant une glissière transversale, qui est muni de moyens de raccordement au tracteur, la partie intérieure de la poutre étant montée de façon coulissante dans ou sur cette glissière transversale, des moyens étant prévus pour immobiliser cette partie coulissante de la poutre dans la position voulue dans ou sur la glissière.

Suivant un mode de réalisation possible, en particulier dans le cas de machines de poids relativement élevé, il est prévu un système de commande de réglage entre le support formant glissière et la partie coulissante de la poutre. Ce système peut être de type mécanique, hydraulique ou autre. Il peut être constitué avantageusement par une vis-mère portée par l'un des éléments et coopérant avec l'autre élément, cette vis-mère pouvant être commandée au moyen d'une manivelle, d'un volant ou analogue.

La poutre peut être articulée vers sa partie médiane autour de l'axe vertical. Ainsi, le corps portant les organes de la machine peut être amené par pivotement autour de cet axe dans l'une ou l'autre des deux positions précitées. Dans la position de travail normale, les deux parties de la poutre sont alignées, tandis que dans la seconde position, qui constitue la position de transport ou de travail en reculant, la partie extérieure libre de la poutre est rabattue contre la face arrière de la première partie, qui sert au montage de cette poutre dans ou sur la glissière transversale.

De préférence, des moyens sont prévus pour immobiliser la partie de poutre extérieure dans l'une ou l'autre de ses deux positions possibles, par exemple à l'aide de verrous appropriés ou analogues, prévus sur les deux parties de la poutre.

Suivant une autre particularité, il est prévu sur la partie de la poutre montée dans ou sur la glissière transversale une boîte de renvoi transmettant l'entraînement entre l'arbre raccordé à l'arbre de prise de force du tracteur et un bout d'arbre transversal, et un arbre démontable est prévu entre ce bout d'arbre et un autre bout d'arbre portant une roue dentée ou analogue, pour l'entraînement des organes actifs de la machine. Dans la position de travail normale, l'entraînement est ainsi transmis par l'intermédiaire de cette boîte de renvoi, du premier bout d'arbre porté par celle-ci, de l'arbre démontable, et du bout d'arbre portant la roue dentée d'entraînement des organes actifs de la machine. Une chaîne assure alors cet entraînement des organes actifs à partir de cette roue dentée.

Suivant une autre particularité encore, le premier bout d'arbre relié à la boîte de renvoi porte une roue dentée ou un organe équivalent et, quand la partie extérieure de la poutre a été rabattue pour le travail en reculant, l'entraînement des organes actifs de la machine peut avoir lieu à partir de cette roue dentée, ce qui permet de tenir compte de l'inversion de sens d'entraînement alors requise sans devoir faire appel à des moyens supplémentaires importants.

L'arbre démontable est alors bien entendu déposé.

La description qui va suivre, faite en regard du dessin annexé, donné à titre non limitatif, permettra de mieux comprendre l'invention.

La Figure 1 est une vue en plan schématique d'une récolteuse-hacheuse suivant l'invention, montrant ses deux positions d'utilisation, le tracteur auquel la machine est normalement attelée n'étant représenté que partiellement par son contour.

La Figure 2 est une vue schématique en coupe par la ligne II-II en Fig. 1.

La Figure 3 est une vue schématique en coupe par la ligne III-III en Fig. 1, montrant une autre partie de la machine.

La Figure 4 est une représentation très schématisée montrant le sens de passage de la chaîne sur les roues à chaîne pour l'entraînement des organes actifs de la machine après rabattement de la partie extérieure de la poutre.

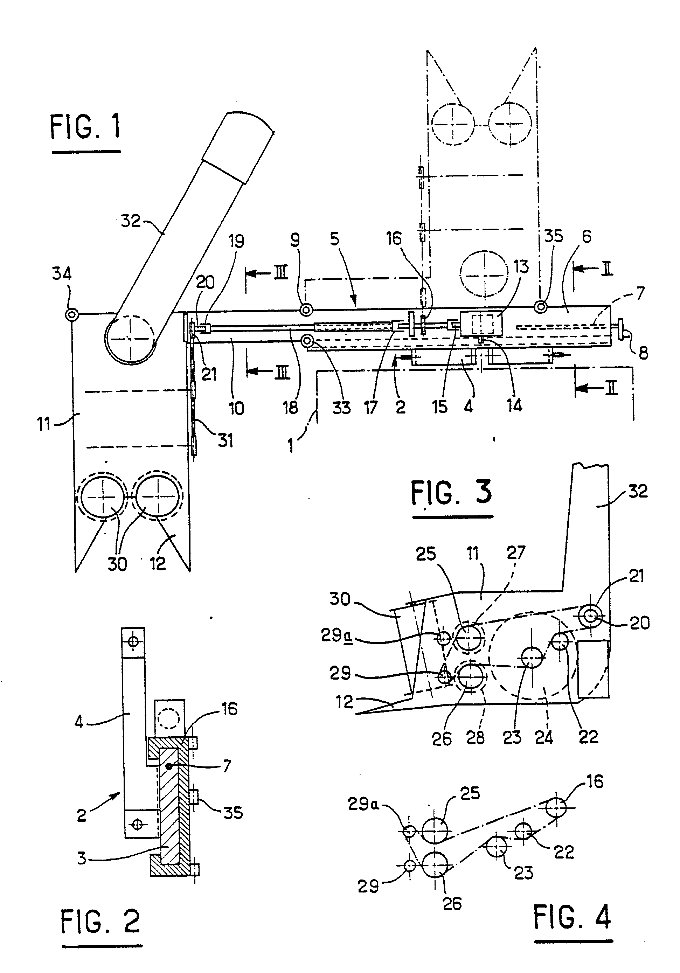

Sur la Fig. 1, on a indiqué en 1 un tracteur auquel la machine est attelée. Ce tracteur a été esquissé seulement par son contour arrière, simplement pour pouvoir interpréter la position de la machine par rapport à lui.

La récolteuse-hacheuse suivant l'invention comprend un support désigné d'une façon générale par la référence 2, comportant une traverse formant glissière 3 portant des éléments 4 de raccordement du support au système d'attelage trois points du tracteur 1 auquel la machine est attelée.

Le châssis de la machine comprend en outre une poutre transversale désignée dans son ensemble par la référence 5. Cette poutre comporte une première partie ou partie intérieure 6 ayant en coupe une forme de C comme cela est bien visible sur la Fig. 2. Cette partie 6 de la poutre 5 est engagée sur la traverse formant glissière 3 du support de façon à pouvoir coulisser sur elle pour le réglage de la position latérale de la machine par rapport au tracteur, comme indiqué plus loin. Sur la Fig. 1, on a indiqué schématiquement en 7 un dispositif de réglage comprenant une vis-mère terminée par un volant de manœuvre 8. Cette vis-mère est immobilisée longitudinalement sur la partie 6 de la poutre et elle se déplace longitudinalement, lors de sa rotation, dans une partie formant écrou de la traverse 3 du support ou d'une partie reliée à celle-ci, ce qui permet le réglage latéral de la machine.

La partie 6 de la poutre 5 porte, à son extrémité opposée au volant de manœuvre 8, un axe d'articulation vertical 9 placé dans le plan de sa face arrière, pour le raccordement à cette partie 6 d'une partie de poutre extérieure 10. Le corps de la récolteuse-hacheuse, indiqué schématiquement en 11, est porté par cette partie de poutre extérieure 10. On a montré schématiquement sur le dessin un équipement à maïs-fourrage, indiqué en 12, mais on comprendra que la machine pourrait tout aussi bien être équipée d'un mécanisme de coupe différent.

La partie extérieure 10 de la poutre 5 est ainsi déplaçable par pivotement autour de l'axe 9 entre deux positions de travail différentes, comme décrit plus loin.

On décrira maintenant les organes assurant l'entraînement des organes actifs de la machine. On a indiqué en 13 sur la Fig. 1 une boîte de renvoi de type classique montée sur la partie 6 de la poutre 5 et qui peut renfermer simplement un renvoi à pignons d'angle. Cette boîte porte un bout d'arbre 14 dirigé longitudinalement par rapport à la machine, en vue de son raccordement d'une manière en soi usuelle à l'arbre de prise de force du tracteur auquel la machine est attelée. On a indiqué en 15 l'arbre de sortie de la boîte de renvoi 13, qui est orienté transversalement et qui est disposé au-dessus de la partie intérieure 6 de la poutre 5. Cet arbre 15 porte, comme montré, une roue dentée 16 dont le rôle sera indiqué plus loin. Il se termine à son extrémité libre par un accouplement 17 pouvant recevoir un arbre démontable ou amovible 18, qui est relié à son autre extrémité à un accouplement 19 terminant un bout d'arbre 20 porté par le corps 11 de la machine. Comme indiqué schématiquement, l'arbre amovible 18 est un arbre télescopique, afin de tenir compte de la variation de longueur nécessaire lors du réglage de la position de la machine comme indiqué plus loin.

L'arbre 20 porte une roue dentée 21 qui forme la première roue dentée d'une ligne de transmission assurant l'entraînement des organes actifs de la machine. On voit sur la Fig. 3 que cette ligne de transmission comprend, de l'arrière vers l'avant, une roue dentée de renvoi 22, une roue dentée 23 qui est calée sur l'arbre du rotor hacheur 24 de la récolteuse-hacheuse, des roues dentées 25 et 26 qui sont calées sur l'arbre des rouleaux d'amenée 27 et 28 de la machine, et une roue dentée 29 à partir de laquelle est assuré l'entraînement en rotation des deux toupies de coupe 30 représentées également de façon schématique sur la Fig. 1. Une chaîne 31 passe sur les roues dentées précitées de la manière illustrée sur la Fig. 3, afin d'assurer l'entraînement des organes actifs de la machine dans le sens correct à partir de la roue dentée 21 calée sur l'arbre 20.

On a montré sur la Fig. 1 la position de travail normale de la récolteuse-hacheuse, qui se déplace alors à côté du tracteur lors de la progression de celui-ci dans le champ, les deux parties 6, 10 de la poutre 5 étant alignées. Les produits coupés sont hachés par la machine et projetés par la goulotte 32 dans une remorque qui peut être attelée également au tracteur ou qui accompagne celui-ci. Selon l'écartement entre les rangs de produits à récolter, la position latérale de la récolteuse-hacheuse par rapport au tracteur peut être réglée au moyen du volant 8 par coulissement de la poutre 5 sur la traverse de support 3 formant glissière. Si le pas de la vis-mère 7 est convenablement choisi, un auto-verrouillage est obtenu, et aucun moyen de blocage supplémentaire n'est requis pour immobiliser le corps de la récolteuse-hacheuse dans la position de réglage latéral choisie.

Afin d'éviter, dans cette condition de travail, tout décalage angulaire de la partie extérieure 10 de la poutre 5 par rapport à sa partie intérieure 6 à partir de sa position d'alignement, il est prévu un dispositif de verrouillage 33 sur la face avant de la poutre 5, c'est-à-dire sur la face opposée à celle portant l'axe d'articulation 9. Ce dispositif de verrouillage peut, si désiré, être constitué simplement par des œilletons prévus sur les deux parties de la poutre 5 et pouvant être amenés dans une relation de coïncidence, pour la réception de broches de verrouillage.

On supposera maintenant que l'on désire rabattre le corps de la récolteuse-hacheuse derrière le tracteur pour le transport ou pour travailler en reculant. Dans ce cas, les broches de verrouillage en 33 sont enlevées, ce qui libère angulairement la partie extérieure 10 de la poutre 5 par rapport à la partie intérieure 6. L'arbre télescopique 18 est également démonté. Il est alors aisé, pour le conducteur du tracteur, de faire pivoter le corps de la récolteuse-hacheuse avec la partie extérieure 10 de la poutre 5 autour de l'articulation 9, pour les rabattre contre la face arrière de la partie de poutre 6, comme indiqué en pointillé sur la Fig. 1. Afin de pouvoir immobiliser le corps de la récolteuse-hacheuse dans cette nouvelle position, il est prévu sur le corps de la machine en 34 et sur la face arrière de la partie de poutre 6 des moyens de verrouillage, par exemple des œilletons pouvant être amenés en coïncidence lors du rabattement de la partie de poutre 10 et pouvant recevoir alors une broche de verrouillage qui maintient la machine dans cette nouvelle position.

Pour le transport, la poutre 5 en condition repliée peut être réglée latéralement par rapport à la traverse 3 formant glissière au moyen du volant 8, pour positionner par exemple le corps de la machine dans l'axe longitudinal du tracteur.

Si la récolteuse-hacheuse doit travailler en début de champ dans des conditions exigeant un travail en reculant, il suffit de dégager la chaîne 31 des roues dentées 21 et suivantes, et d'adapter cette chaîne sur la roue dentée 16 calée sur l'arbre de sortie 15 de la boîte de renvoi 13 au lieu de la roue dentée 21, l'inversion rendue nécessaire par la nouvelle position de la récolteuse-hacheuse derrière le tracteur étant obtenue en changeant le sens de passage de la chaîne sur les roues dentées associées aux organes actifs de la machine, sans que des moyens supplémentaires soient requis (Fig. 4).

On voit sur cette Fig. 4 qu'il est prévu pour l'entraînement des toupies de coupe, dans cette condition de travail de la machine, une autre roue dentée 29a sur laquelle la chaîne d'entraînement est alors adaptée. Les deux roues dentées 29 et 29a peuvent être reliées l'une à l'autre par une chaîne ou d'une manière analogue pour faire tourner les toupies de coupe 30 à partir de l'une d'elles, ou bien elles peuvent être reliées séparément à ces toupies de coupe pour leur entraînement en rotation.

Dans cette position de la récolteuse-hacheuse, la goulotte 32 peut être dirigée vers l'avant si cela est désirable, la remorque se déplaçant alors devant le tracteur.

On voit que l'agencement faisant l'objet de l'invention tient ainsi compte des facteurs devant être pris en considération pour permettre à la machine de travailler dans les deux positions désirées, tout en conservant une faculté de réglage de la position latérale d'une manière à la fois simple et rapide, par la seule manœuvre d'un organe de commande. Au repos, le repliement de la poutre 5 réduit en outre nettement l'encombrement de la machine, ce qui représente un gain de place important.

## Revendications

1. Récolteuse-hacheuse du type comportant un châssis destiné à être attelé à un tracteur (1) et à s'étendre latéralement à ce tracteur en position de travail normale, ce châssis portant le corps (11) de la machine avec les organes actifs usuels étant soutenu du côté opposé au tracteur (1) par une roue porteuse roulant sur le sol, ledit châssis comportant une poutre (5) reliée au tracteur formée d'une première partie intérieure (6) et d'une seconde partie extérieure (10) articulées entre elles autour d'un axe vertical (9), la partie extérieure (10) portant le corps (11) de la machine et pouvant être déplacée par pivotement autour de l'axe vertical (9) entre une première position située dans l'alignement de la partie intérieure (6) et une seconde position dans laquelle elle est rabattue derrière cette partie intérieure (6), caractérisée en ce que ce châssis de la machine comprend en outre un support (2) formant une glissière transversale (3), qui est muni de moyens (4) de raccordement au tracteur (1), la partie intérieure (6) de la poutre (5) étant montée de façon coulissante dans ou sur cette glissière transversale (3), des moyens étant prévus pour immobiliser cette partie coulissante de la poutre dans la position voulue dans ou sur la glissière (3).

2. Récolteuse-hacheuse suivant la revendication 1, caractérisée en ce qu'il est prévu un système (7, 8) de commande de réglage entre le support formant glissière et la partie coulissante (6) de la poutre.

3. Récolteuse-hacheuse suivant la revendication 2, caractérisée en ce que ce système de commande de réglage est de type mécanique ou hydraulique.

4. Récolteuse-hacheuse suivant la revendication 2 ou 3, caractérisée en ce que le système de commande de réglage est constitué par une vis-mère (7) portée par l'un des éléments comprenant la glissière (3) et la poutre (5) et coopérant avec l'autre élément, cette vis-mère portant une manivelle, un volant (8) ou un organe de manœuvre analogue.

5. Récolteuse-hacheuse suivant l'une quelconque des revendications précédentes, caractérisée en ce que la poutre (5) est articulée vers sa partie médiane autour de l'axe vertical (9).

6. Récolteuse-hacheuse suivant la revendication 5, caractérisée en ce que cet axe d'articulation (9) se trouve dans le plan de la face arrière de la poutre (5).

7. Récolteuse-hacheuse suivant l'une quelconque des revendications précédentes, caractérisée en ce que des moyens (33, 34, 35) sont prévus pour immobiliser les deux parties de la poutre (5) dans leurs positions respectives d'alignement et de rabattement respectivement.

8. Récolteuse-hacheuse suivant l'une quelconque des revendications précédentes, caractérisée en ce que la partie intérieure (6) de la poutre (5) montée sur ou dans la glissière (3) porte une boîte de renvoi (13) présentant un bout d'arbre de sortie (15) orienté transversalement, et en ce qu'il est prévu un arbre démontable (18) pouvant être intercalé entre ce bout d'arbre (15) et un autre bout d'arbre (20) prévu sur le corps (11) de la machine et portant une roue dentée (21) ou analogue, pour le passage d'une chaîne (31) assurant l'entraînement des organes actifs de la machine.

9. Récolteuse-hacheuse suivant la revendication 8, caractérisée en ce que cet arbre démontable (18) est un arbre télescopique pour compenser le réglage latéral de la machine par rapport au tracteur.

10. Récolteuse-hacheuse suivant la revendication 8 ou 9, caractérisée en ce que le bout d'arbre (15) de sortie de la boîte de renvoi (13) porte également une roue dentée (16) sur laquelle une chaîne de transmission (31) peut être adaptée dans la position de rabattement de la machine derrière le tracteur pour l'entraînement des organes actifs de cette machine.

## Claims

1. A forage harvester of the type comprising a frame to be coupled to a tractor (1) and to extend at the side of this tractor in the normal working position, this frame carrying the body (11) of the machine with the usual active members being supported on the opposite side from the tractor (1) by a carrying wheel rolling along the ground, the said frame comprising a beam (5) connected to the tractor and formed of a first, inner part (6) and a second, outer part (10) hinged to each other around a vertical shaft (9), the outer part (10) carrying the body (11) of the machine and being pivotally displaceable around the vertical shaft (9) between a first position situated in line with the inner part (6) and a second position in which it is folded back behind this inner part (6), characterized in that this frame of the machine additionally comprises a support (2) forming a transverse slide (3) which is equipped with means (4) of connection to the tractor (1), the inner part (6) of the beam (5) being mounted slidingly in or on this transverse slide (3), means being provided to immobilize this sliding part of the beam in the desired position in or on the slide (3).

2. A forage harvester according to claim 1, characterized in that an adjustment control system (7, 8) is provided between the support forming the slide and the sliding part (6) of the beam.

3. A forage harvester according to claim 2, characterized in that this adjustment control system is of the mechanical or hydraulic type.

4. A forage harvester according to claim 2 or claim 3, characterized in that the adjustment control system consists of a leading screw (7) carried by one of the members comprising the slide (3) and the beam (5) and cooperating with the other member, this leading screw carrying a crank, hand wheel (8) or similar control member.

5. A forage harvester according to any one of the preceding claims, characterized in that the beam (5) is hinged towards its medial part around the vertical shaft (9).

6. A forage harvester according to claim 5, characterized in that this hinge pin (9) is located in the plane of the rear face of the beam (5).

7. A forage harvester according to any one of the preceding claims, characterized in that means (33, 34, 35) are provided to immobilize respectively the two parts of the beam (5) in their respective positions of alignment and folding back.

8. A forage harvester according to any one of the preceding claims, characterized in that the inner part (6) of the beam (5) mounted on or in the slide (3) carries a gear box (13) with an output shaft piece (15) oriented transversely and in that a detachable shaft (18) is provided which can be interposed between this shaft piece (15) and another shaft piece (20) provided on the body (11) of the machine and carrying a toothed wheel (21) or the like, for the passage of a chain (31) driving the active members of the machine.

9. A forage harvester according to claim 8, characterized in that this detachable shaft (18) is a telescopic shaft to compensate lateral adjustment of the machine in relation to the tractor.

10. A forage harvester according to claim 8 or claim 9, characterized in that the output shaft piece (15) from the gear box (13) also carries a toothed wheel (16) on which a transmission chain (31) can be accommodated when the machine is in the folded back position behind the tractor, to drive the active members of this machine.

**Patentansprüche**

1. Feldhäcksler des Typs, der ein Chassis umfaßt, das zur Anhängung an eine Zugmaschine (1) bestimmt ist und sich von dieser seitlich in eine normale Arbeitsstellung erstreckt, wobei das Chassis den Körper (11) der Maschine mit den üblichen aktiven Organen trägt und auf der der Zugmaschine (1) abgewandten Seite durch ein auf dem Boden abrollendes Stützrad abgestützt ist, wobei das genannte Chassis einen Träger (5) umfaßt, der mit der Zugmaschine verbunden ist und einen ersten inneren Teil (6) und einen zweiten äußeren Teil (10) umfaßt, die gelenkig miteinander über eine vertikale Achse (9) verbunden sind und von denen der äußere Teil (10) den Körper (11) der Maschine trägt und durch Verschwenken um die vertikale Achse (9) zwischen einer ersten Stellung, die in Fluchtung mit dem inneren Teil (6) gelegen ist, und einer zweiten Stellung verstellbar ist, in der er hinter diesem inneren Teil (6) zur Anlage kommt, dadurch gekennzeichnet, daß das Chassis der Maschine unter anderem einen Tragbock (2) aufweist, der eine quer verlaufende Gleitbahn (3) bildet und mit Mitteln (4) zum Anbringen an die Zugmaschine (1) versehen ist, daß der innere Teil (6) des Trägers (5) in oder auf dieser quer verlaufenden Gleitbahn (3) verschieblich montiert ist und daß Mittel vorgesehen sind, um diesen verschieblichen Teil des Trägers in einer gewünschten Stellung in oder auf der Gleitbahn (3) festzulegen.

2. Feldhäcksler nach Anspruch 1, dadurch gekennzeichnet, daß eine Einstellvorrichtung (7, 8) zwischen dem die Gleitbahn bildenden Stützteil und dem verschieblichen Teil (6) des Trägers vorgesehen ist.

3. Feldhäcksler nach Anspruch 2, dadurch gekennzeichnet, daß die Einstellvorrichtung von mechanischer oder hydraulischer Art ist.

4. Feldhäcksler nach Anspruch 2 oder 3, dadurch gekennzeichnet, daß die Einstellvorrichtung eine Gewindespindel (7) aufweist, die durch eines der Elemente, das die Gleitbahn (3) oder den Träger (5) enthält, getragen wird und mit dem anderen Element zusammenwirkt, wobei diese Gewindespindel eine Kurbel, ein Handrad (8) oder ein analoges Betätigungsorgan trägt.

5. Feldhäcksler nach irgendeinem der voranstehenden Ansprüche, dadurch gekennzeichnet, daß der Träger (5) in seinem mittleren Bereich um die vertikale Achse (9) schwenkbar ist.

6. Feldhäcksler nach Anspruch 5, dadurch gekennzeichnet, daß die Schwenkachse (9) sich in der Ebene der rückwärtigen Stirnfläche des Trägers (5) befindet.

7. Feldhäcksler nach irgendeinem der voranstehenden Ansprüche, dadurch gekennzeichnet, daß Mittel (33, 34, 35) vorgesehen sind, um die beiden Teil des Trägers (5) in ihren jeweiligen Fluchtungs- bzw. Anschlagsstellungen festzulegen.

8. Feldhäcksler nach irgendeinem der voranstehenden Ansprüche, dadurch gekennzeichnet, daß der innere Teil (6) des Trägers (5), der auf oder in der Gleitbahn (3) montiert ist, einen Getriebekasten (13) trägt, der das Ende einer Ausgangswelle (15) enthält, die in Querrichtung orientiert ist, und daß eine abnehmbare Welle (18) vorgesehen ist, die zwischen dem Ende der Welle (15) und einem anderen Wellenstummel (20) zwischengeschaltet werden kann, der auf dem Körper (11) der Maschine vorgesehen ist und ein Zahnrad (21) oder einen analogen Teil für eine Kette (31) trägt, welche den Antrieb der aktiven Organe der Maschine sicherstellt.

9. Feldhäcksler nach Anspruch 8, dadurch gekennzeichnet, daß die abnehmbare Welle (18) eine Teleskopwelle ist, um die seitliche Einstellung der Maschine in bezug auf die Zugmaschine zu kompensieren.

10. Feldhäcksler nach Anspruch 8 oder 9, dadurch gekennzeichnet, daß das Ende der Ausgangswelle (15) des Getriebekastens (13) ebenfalls ein Zahnrad (16) trägt, auf dem eine Transmissionskette (31) in der Anschlagstellung der Maschine hinter der Zugmaschine angepaßt werden kann, um die aktiven Organe dieser Maschine anzutreiben.

FIG. 1

FIG. 2

FIG. 3

FIG. 4